# EUROPEAN PATENT SPECIFICATION

(11) **EP 3 424 241 B1**
(45) Date of publication and mention of the grant of the patent: **12.11.2025**
(21) Application number: 16710848.9
(22) Date of filing: 01.03.2016
(51) Int. Cl.: H04W 40/24, H04W 8/06, H04W 60/00, H04W 8/08

(54) **REDUCING TIME REQUIRED FOR LOCATION LOOKUP WHEN DOWNLINK PACKETS ARRIVE BY ASSISTING PRELOADING OF A LOCATION OF A WIRELESS DEVICE INTO THE IP ADVERTISEMENT POINT (IAP)**
VERRINGERUNG DER BENÖTIGTEN ZEIT FÜR STANDORTSUCHE BEI DER ANKUNFT VON DOWNLINK-PAKETEN DURCH UNTERSTÜTZUNG DES VORLADENS EINES STANDORTES EINER DRAHTLOSEN VORRICHTUNG IN DEN IP-WERBEPUNKT (IAP)
RÉDUCTION DU TEMPS NÉCESSAIRE POUR UNE RECHERCHE DE LOCALISATION LORS DE L'ARRIVÉE DE PAQUETS DE LIAISON DESCENDANTE PAR UNE AIDE AU PRÉCHARGEMENT D'UNE LOCALISATION D'UN DISPOSITIF SANS FIL DANS UN POINT PUBLICITAIRE IP (IAP)

(43) Date of publication of application: 09.01.2019
(73) Proprietor: Telefonaktiebolaget LM Ericsson (publ), 164 83 Stockholm (SE)
(72) Inventor: FU, Zhang, 120 67 Stockholm (SE); BISL, Rashmi, Epping NSW 2121 (AU); ROELAND, Dinand, 192 77 Sollentuna (SE); LARSSON, Conny, 184 94 Åkersberga (SE); ZAHEMSZKY, András, 192 53 Sollentuna (SE)
(74) Representative: Zacco Sweden AB
(86) International application number: PCT/SE2016/050161
(87) International publication number: WO 2017/151023

(56) References cited:
- US-A- 5 490 139
- US-A1- 2006 013 227
- US-A1- 2007 140 264
- US-A1- 2008 013 534
- US-A1- 2014 010 085
- US-A1- 2014 064 246
- US-B1- 8 873 555
- US-B1- 9 178 820
- "3rd Generation Partnership Project; Technical Specification Group Core Network and Terminals; Basic call handling; Technical realization (Release 13)", 3GPP STANDARD; 3GPP TS 23.018, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V13.0.0, 21 December 2015 (2015-12-21), pages 1 - 300, XP051047152
- LAMPARTER J GIRAO M LIEBSCH T MELIA NEC EUROPE LTD B: "A Generic Location Privacy Framework; draft-girao-generic-privacy-framework-00.txt", A GENERIC LOCATION PRIVACY FRAMEWORK; DRAFT-GIRAO-GENERIC-PRIVACY-FRAMEWORK-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 July 2005 (2005-07-08), XP015041552
- NOKIA: "Functionalities of IMS network elements and the Presence Information Server", 3GPP DRAFT; S2-013354(PRESENCE_ELEMENT_FUNC), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Mexico; 20011122, 22 November 2001 (2001-11-22), XP050236955

## Description

### TECHNICAL FIELD

The invention relates to a mobile communication network. More specifically, the invention relates to assisting preloading of a location of a wireless device in a mobile communication network.

### BACKGROUND

Currently a number of activities are ongoing to define requirements on the next generation mobile network. One effort is described in the 5G (Fifth Generation) White Paper by the Next Generation Mobile Networks (NGMN) Alliance, available at https://www.ngmn.org/sg-white-paper.html at the time of filing this patent application. The white paper lists a diverse set of use cases, including IoT (Internet of Things), vehicle-to-vehicle communications, controlling industrial robots, high quality media delivery, etc. These use cases define the requirements for the next generation of mobile networks, where flexibility is one of the key requirements. For each use case, user plane packets should traverse a different sequence of network service functions. A 5G core network architecture should offer an infrastructure to support flexibility of organizing such service chains.

In the current proposal of the anchorless/mobile service chaining concept, there is an IP (Internet Protocol) Announcement Point (IAP). The IAP is an entity that is responsible for translating an IP address of a wireless device to a current location of the wireless device. If the IAP does not have information about the location of the UE (User Equipment) upon receiving a downlink packet, it has to query a Location Register (LR) about the location of the UE. Until the location is resolved, the packet(s) need to be buffered at the IAP, and thus the communication between endpoints is delayed. In certain cases, this extra delay can have negative effect on the transport protocol and therefore can degrade the user experience.

US8873555B1 describes a packet processing on data networks and, more specifically to controlling access to network devices. US2007/140264A1 describes address translation device and a method for forwarding packets.

### SUMMARY

The invention is defined by the independent claims. Further, embodiments of the invention are defined by the claims. It is an object to reduce time required for location lookup when downlink packets arrive.

According to a first aspect, it is provided a method for assisting preloading of a location of a wireless device of a mobile communication network. The method is performed in a location maintenance node, LMN, and comprises the steps of: receiving an indication to preload a location of the wireless device; determining an address of an address announcement server, denoted IP announcement server, IAP associated with the wireless device; and transmitting a preload command, the preload command indicating to trigger a preload of a location of the wireless device, the preload command causing the address announcement server, IAP, to install location information about the wireless device in a local cache, as incoming packets are soon expected to arrive to the address announcement server, IAP, destined to the wireless device, wherein the step of transmitting the preload command comprises transmitting the preload command to the address announcement server and/or to the location register.

The step of receiving the indication may comprise receiving the indication, in the form of a new connection message, from a communication tracker.

The step of receiving the indication may comprise receiving the indication, in the form of an indication that the wireless device has transitioned to a connected state from an inactive state.

The step of receiving the indication may comprise receiving the indication, in the form of an indication that the wireless device has attached to mobile communication network.

The step of determining the address may comprise requesting the address from a routing information node.

According to a second aspect, it is provided a location maintenance node, LMN, for assisting preloading of a location of a wireless device of a mobile communication network. The location maintenance node comprises: a processor; and a memory storing instructions that, when executed by the processor, causes the location maintenance node to: receive an indication to preload a location of the wireless device; determine an address of an address announcement server, denoted by IP announcement server, IAP, associated with the wireless device; and transmit a preload command, the preload command indicating to trigger a preload of a location of the wireless device, the preload command causing the address announcement server, IAP, to install location information about the wireless device in a local cache, as incoming packets are soon expected to arrive to the address announcement server, IAP, destined to the wireless device, wherein transmitting the preload command comprises transmitting the preload command to the address announcement server and/or to the location register.

The indication may be in the form of a new connection message, received from a communication tracker.

The indication may be in the form of an indication that the wireless device has transitioned to a connected state from an inactive state.

The indication may be in the form of an indication that the wireless device has attached to mobile communication network.

The instructions to determine the address may comprise instructions that, when executed by the processor, causes the location maintenance node to request the address from a routing information node.

The instructions to transmit the preload command may comprise instructions that, when executed by the processor, causes the location maintenance node to transmit the preload command to the address announcement server.

The instructions to transmit the preload command may comprise instructions that, when executed by the processor, causes the location maintenance node to transmit the preload command to the location register.

According to a third aspect, it is provided a location maintenance node comprising: means for receiving an indication to preload a location of a wireless device; means for determining an address of an address announcement server, denoted by IP announcement server, IAP, associated with the wireless device; and means for transmitting a preload command, the preload command indicating to the receiver to trigger a preload of a location of the wireless device, the preload command causing the address announcement server, IAP, to install location information about the wireless device in a local cache, as incoming packets are soon expected to arrive to the address announcement server, IAP, destined to the wireless device.

According to a fourth aspect, it is provided a computer program for assisting preloading of a location of a wireless device of a mobile communication network. The computer program comprises computer program code which, when run on the location maintenance node, LMN, causes the location maintenance node to: receive an indication to preload a location of the of the wireless device; determine an address of an address announcement server associated with the wireless device; and transmit a preload command, the preload command indicating to the receiver to trigger a preload of a location of the wireless device, the preload command causing the address announcement server, IAP, to install location information about the wireless device in a local cache, as incoming packets are soon expected to arrive to the address announcement server, IAP, destined to the wireless device.

According to a fifth aspect, it is provided a computer program product comprising a computer program according to the ninth aspect and a computer readable means on which the computer program is stored.

According to a sixth aspect, it is provided a method for assisting preloading of a location of a wireless device of a mobile communication network. The method is performed in an address announcement server, denoted IP announcement server, IAP, and comprises the steps of: receiving a preload command comprising an identifier of the wireless device from a location maintenance node, LMN; determining a location of the wireless device; and storing the location information of the wireless device in a local cache, as incoming packets are soon expected to arrive to the address announcement server, IAP, destined to the wireless device.

The step of determining the location may comprise requesting the location of the wireless device from a location register.

The method may further comprise the step of: checking whether there is an entry for the wireless device in the location database; in which case the steps of determining the location and storing the location are only performed when there is no entry for the wireless device in the location database.

In the step of receiving the preload command, the preload command may further comprise the location of the wireless device; in which case the step of determining the location comprises reading the location from the preload command.

The method may further comprise the steps of: detecting a downlink packet destined for a wireless device; and transmitting an allocation message to a routing information node, the allocation message comprising an address of a source device of the downlink packet and an address of the address announcement server.

In the step of transmitting the allocation message, the allocation message may further comprise the address of the wireless device.

According to a seventh aspect, it is provided an address announcement server, denoted IP announcement server, IAP, for assisting preloading of a location of a wireless device of a mobile communication network. The address announcement server comprises: a processor; and a memory storing instructions that, when executed by the processor, causes the address announcement server to: receive a preload command comprising an identifier of the wireless device from a location maintenance node, LMN; determine a location of the wireless device; and store the location of the wireless device in a local cache, as incoming packets are soon expected to arrive to the address announcement server, IAP, destined to the wireless device.

The instructions to determine the location may comprise instructions that, when executed by the processor, causes the address announcement server to request the location of the wireless device from a location register.

The address announcement server may further comprise instructions that, when executed by the processor, causes the address announcement server to: check whether there is an entry for the wireless device in the location database; in which case the instructions to determine the location and to store the location are only executed when there is no entry for the wireless device in the location database.

The preload command may further comprise the location of the wireless device; and wherein the instructions to determine the location comprise instructions that, when executed by the processor, causes the address announcement server to read the location from the preload command.

The address announcement server may further comprise instructions that, when executed by the processor, causes the address announcement server to: detect a downlink packet destined for a wireless device; and transmit an allocation message to a routing information node, the allocation message comprising an address of a source device of the downlink packet and an address of the address announcement server.

The allocation message may further comprise the address of the wireless device.

According to an eighth aspect, it is provided an address announcement server ,denoted IP announcement server, IAP comprising: means for receiving a preload command comprising an identifier of a wireless device; means for determining a location of the wireless device; and means for storing the location of the wireless device in a local cache, as incoming packets are soon expected to arrive to the address announcement server, IAP, destined to the wireless device.

According to a ninth aspect, it is provided a computer program for assisting preloading of a location of a wireless device of a mobile communication network. The computer program comprises computer program code which, when run on the address announcement server causes the address announcement server to: receive a preload command comprising an identifier of the wireless device from a location maintenance node, LMN; determine a location of the wireless device; and store the location of the wireless device in a local cache, as incoming packets are soon expected to arrive to the address announcement server, IAP, destined to the wireless device.

According to a tenth aspect, it is provided a method for assisting preloading of a location of a wireless device of a mobile communication network. The method is performed in a location register and comprises the steps of: receiving a preload command comprising an identifier of the wireless device; determining a location of the wireless device; and transmitting the location of the wireless device to an address announcement server denoted IP announcement server IAP for storing in a local cache, as incoming packets are soon expected to arrive to the address announcement server, IAP, destined to the wireless device.

According to an eleventh aspect, it is provided a location register for assisting preloading of a location of a wireless device of a mobile communication network. The location register comprises: a processor; and a memory storing instructions that, when executed by the processor, causes the location register to: receive a preload command comprising an identifier of the wireless device from a location maintenance node, LMN; determine a location of the wireless device; and transmit the location of the wireless device to an address announcement server, denoted IP announcement server, IAP, for storing in a local cache, as incoming packets are soon expected to arrive to the address announcement server, IAP, (400) destined to the wireless device.

The following terms are used in the specification.

Communication tracker: a node which is responsible for detecting new communication paths.

Location maintenance node: a node which is responsible for deciding when the location of a wireless device should be preloaded in an address announcement server.

Service function: a function which can be applied for uplink and/or downlink packets in a mobile communication network. The service function is triggered by a classifier adding a corresponding tag on the packet.

Uplink classifier: a node which determines which service functions should be applied for an uplink packet. The uplink classifier adds one or more tags to the uplink packet, indicating which service functions should be applied.

Connected state: a state in which a wireless device is capable of both receiving and transmitting data over a radio interface.

Inactive state: a state in which a wireless device is not directly able to communicate user data over the radio interface. The wireless device needs to transfer to a connected state before being able to communicate user data. The inactive state is also known as an idle state.

Location register: a node responsible for keeping track of the location of each wireless device within its network.

Routing information node: a node responsible for keeping track of the relationship between address announcement servers, remote devices and wireless devices.

Address announcement server: a node responsible to determine the location of a wireless device for downlink packets. One implementation of this is an IP announcement point (IAP).

Wireless device: user device which can be portable or fixed and can communicate over a wireless interface to a mobile communication network. Can e.g. be a mobile phone, smart phone or a tablet/laptop with wireless connectivity. The wireless device can also be referred to as User Equipment (UE).

Remote device: a device on the other end for communication with the wireless device. In other words, for uplink packets, the address of the remote device will be the destination address and for downlink packets, the address of the remote device is the source address. The remote device can be any device connectable via IP, e.g. a server, another wireless device, etc.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

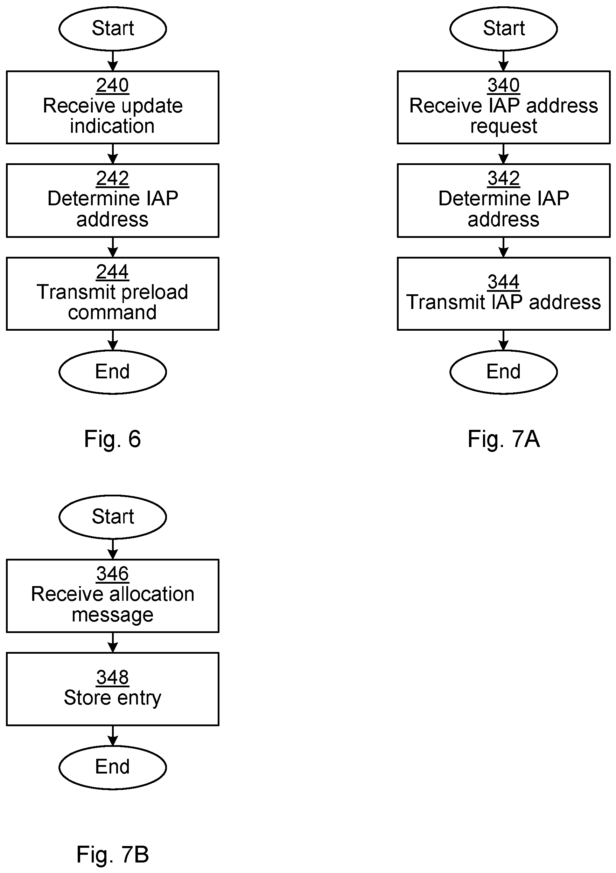

The present invention is described with particular reference to figures 6 (LMN), and 8A (IAP) and 9 (LR), while the description of the remaining figures has been provided for illustrative purposes for a better understanding of the invention.
Fig 1 is a schematic diagram illustrating a cellular communication network where embodiments presented herein may be applied;
Figs 2 to 4 are sequence diagrams illustrating communication between various entities of embodiments which can be applied in the environment of Fig 1;
Figs 5A-D are flow charts illustrating methods performed in a communication tracker for assisting preloading of a location of a wireless device;
Fig 6 is a flow chart illustrating methods performed in a location maintenance node for assisting preloading of a location of a wireless device;
Figs 7A-B are flow charts illustrating methods performed in a routing information node for assisting preloading of a location of a wireless device;
Figs 8A-C are flow charts illustrating methods performed in an address announcement server for assisting resource allocation transfer performed in service function node at the target site;
Fig 9 is a flow chart illustrating methods performed in a location register for assisting preloading of a location of a wireless device;
Fig 10 is a schematic diagram illustrating components of any one of the communication tracker, location maintenance node, a routing information node, address announcement server, and location register of Fig 1, here represented by a single node;
Fig 11 is a schematic diagram showing functional modules of the communication tracker of Fig 1;
Fig 12 is a schematic diagram showing functional modules of the location maintenance node of Fig 1;
Fig 13 is a schematic diagram showing functional modules of the routing information node of Fig 1;
Fig 14 is a schematic diagram showing functional modules of the address announcement server of Fig 1;
Fig 15 is a schematic diagram showing functional modules of the location register of Fig 1; and
Fig 16 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

Embodiments herein relate to proactively preloading location information of the UE (also known as wireless device) in the local caches of relevant IAPs. The idea is to employ a specific service function in the uplink direction, which will contact a location maintenance node (LMN) if it discovers the need of adding location entry to the IAPs. After receiving the notification, the location maintenance node will derive, based on received routing information, the most likely IAP (or IAPs) where the specific traffic flow will enter the network, and send a control message to the selected IAP (or IAPs) to install location information about the specific UE. The contacted IAP will ask the Location Register about the location of the UE, in case it does not already hold an entry for the specific UE. In one embodiment, the Location Register contacts the IAPs to install state after being contacted by the location maintenance node. Once the IAP stores the location of the UE in local storage, it does not need to request the location of the UE when downlink packets for the UE arrive, thus greatly reducing delays for when downlink traffic is set up.

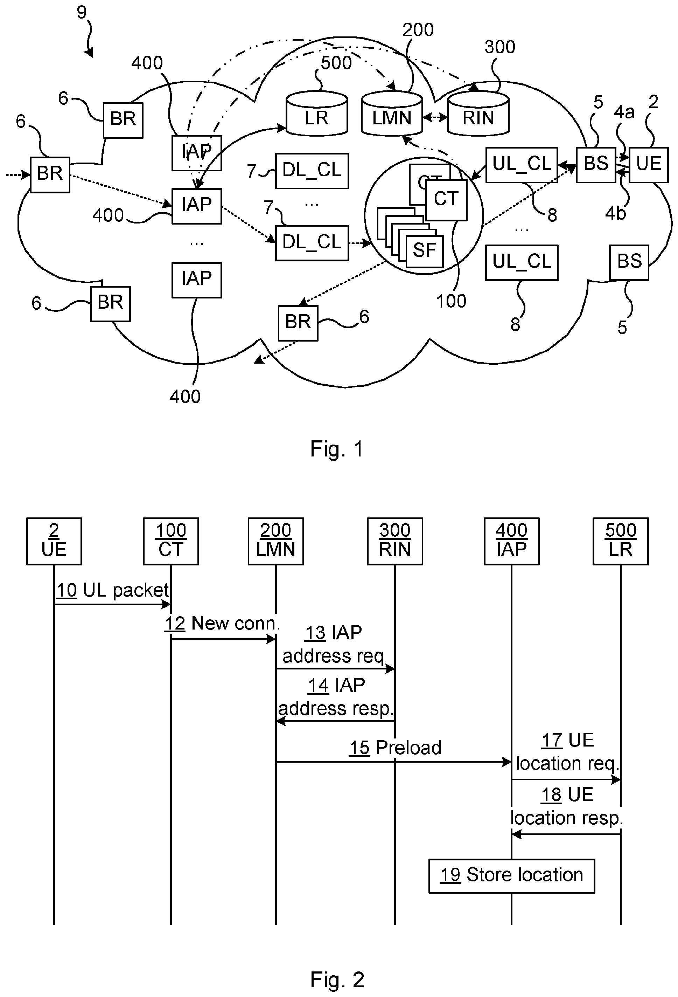

Fig 1 is a schematic diagram illustrating a mobile communication network where embodiments presented herein may be applied.

The mobile communication network 9 of Fig 1 implements the concepts of anchorless and mobile service chaining architecture. One feature of the architecture is that it eliminates the need of anchor points, where it is mandatory that the traffic passes. Instead, traffic can enter and leave the network at places that are optimal from routing perspective (cf. to current Evolved Packet Core, where PDN GWs (Packet Data Network Gateways) act as anchor points). In the anchorless architecture, the IP (Internet Protocol) addresses of the wireless devices do not reflect the location of the wireless device in the network. Therefore, to be able to route incoming packets to the UE 2, the IP address of the UE 2 has to be resolved to the location of the UE 2. An entity called Location Register (LR) 500 is responsible for keeping track of the UEs' locations.

Routing packets from peers in the Internet to the UEs 2 can be summarised in the following. The packets from external networks arrive to a Border Router (BR) 6, which forwards the packet to an appropriate address announcement server 400, herein denoted IAP 400 (IP Advertisement Point). The IAP 400 is an entity that is responsible for translating the IP address of the UE 2 to the current location of the UE 2. There can be multiple IAPs 400 in the network, and a single IAP 400 can advertise (i.e. able to handle) either the whole address range, or parts of the address range. It is allowed for the IAPs 400 to have responsibilities for overlapping address range (e.g. in one case, each IAP 400 advertises the whole address range, so any IAP 400 can handle the packets destined to any UE 2). In one configuration, if multiple IAPs 400 can serve a specific IP address, the Border Router will forward the packet to the closest of those IAPs 400. The IAPs 400 contain local caches, where the UE IP addresses to UE location mappings are stored.

If the IAP 400 receives a packet which is destined to a UE 2, whose location is not available in the local cache, the IAP 400 queries the LR. The LR always holds the latest information about the UE's location, as after every location change (e.g. X2 handover or change of the first service function), the LR is notified and updated. Also, the local cache in the IAP 400 is properly updated at UE mobility and entries may be removed when UE state changes (connected to idle mode) by the LR, so if an IAP 400 has an entry for the UE 2 in the local cache, the entry is correct.

The IAP 400 labels the packet with the location of the UE 2. This can happen differently in different embodiments of the architecture and which way it is done, is not relevant for embodiments presented herein. In one example, the IAP 400 will add an NSH (Network Service Header) header and write the location of the UE 2 to the metadata and then forward the packet to a Downlink Classifier 7, which will determine which set of services the packet needs to go through and updates the NSH header appropriately (e.g. by adding one or more tags). Based on the NSH header, the packet is routed through a set of service functions 90 and after the last service function, it is forwarded towards the correct location written in the metadata. This is either done by forwarding directly on the NSH header, or e.g. by IP, where the original IP packet is encapsulated in another IP packet, which will have the destination address corresponding to the location of the UE 2.

It is important to note that embodiments presented herein do not require the presence of service chaining, and do not depend on the exact method how packets are forwarded inside the operator's network, and also, not on what type of headers and fields are used to convey forwarding information, service chain information and location information. In other words, the embodiments presented herein apply to many different embodiments of the anchorless architecture. Also, the presented solution works (and is sometimes simplified) when the anchored version of the Mobile Service Chaining is used in the network (i.e. when the IAPs 400 advertised pairwise disjoint address spaces).

Uplink packets from the UE 2 are routed through the uplink classifier 8, and a set of service functions 90, before the packets leave the network, if service chains are used; otherwise, packets can be simply routed out to other networks via an appropriate border router 6. Please note that in either of the cases outgoing packets do not pass an IAP 400.

As an important consequence of the anchorless approach, a single UE 2 can have multiple parallel flows that take different paths, for example arriving at different border routers 6, and going through different IAPs 400.

The path of downlink packets, coming from external networks, such as the Internet, are illustrated with dashed lines, while the path of uplink packets, destined to an external network, such as the Internet, are illustrated with dotted lines.

As mentioned above, the packets are routed through a set of service functions 90 inside the network. In fact, the network consists of SFFs (Service Function Forwarders) and SFs (Service Functions). The SFFs have responsibility to forward the packets to SFs and to other SFFs. There is a controller in the network (not shown in the Figure), which is an entity responsible for configuring the SFFs, SFs, and the uplink classifier 8 and downlink classifiers 7.

The current UE location stored in the LR 500 could e.g. be the current base station (BS) 5 the UE 2 is connected to, or the first downlink service function 90 for this UE 2 (the top-of-the-chain), or a combination of these.

As described in the background section, there may be a delay when downlink packets arrive at the IAP 400 and the location of the UE 2 is not available in the IAP 400, whereby the IAP 400 needs to query the LR 500 before it can forward downlink packets appropriately.

Here now follows some example situations illustrating how the performance can be degraded when the location of the UE is not stored in the IAP 400 when downlink packets arrive.

Firstly, web downloads with TCP (Transport Control Protocol) and HTTP (Hypertext Transfer Protocol) 1.1 are affected by any delay. Typically, web pages contain many small objects that are retrieved via parallel TCP connections, sometimes even from multiple servers. The page download time is an important metric, which is typically affected by the session establishment time of the TCP sessions. If during the session establishment buffer SYN-ACK packet(s) are buffered until the location information is resolved, the session establishment time increases, as the round-trip time becomes longer due to the buffering. This prolongs the download of the web page, which will have a negative effect on the user experience.

Secondly any TCP session can be affected. TCP maintains the smooth average of the RTT (Round-Trip Time) and the variation of the RTT. If the IAP buffers the SYN-ACK packets until it receives the location information from the LR 500, the first RTT sample will be typically higher than the subsequent samples. So the buffering will cause longer Retransmission timeouts (RTOs) in the sender for a couple of round-trip times (until the first RTT will have effect on the smoothed RTT value). Longer retransmission timer means that in the case of a packet loss detected via retransmission timeout, the packet will be resent later than if it would have been resent if we didn't buffer the SYN-ACK packet (as the RTO would have expired earlier, since we don't have the first sample that does not show the true RTT). This issue is also valid for the web downloads, where the page download time can be further increased, again negatively affecting the user experience.

Thirdly, persistent TCP connections can be affected by delays. For instance, video streaming solutions often use persistent TCP connections. Through the persistent TCP connection, the client periodically issue HTTP GETs to request subsequent chunks of the video. The TCP connection is typically idle for a few seconds between downloading subsequent chunks (the exact duration of the idle period depends on the client behaviour, the amount of video buffered up in the client, network characteristics, etc.). In the event if the UE happens to go to idle mode, but the persistent TCP connection is not torn down, it can issue a new HTTP GET (or any request to a server it keeps a persistent TCP connection with) without needing to set up a new connection, i.e. without having a 3-way handshake first. In turn, the sender can immediately reply back with a number of packets that fit into the initial congestion window (typically 10 packets). Again, these packets have to be buffered in the IAP until the UE location is retrieved.

Fourthly, any QUIC (Quick UDP (User Datagram Protocol) Connection) session is affected by delays. Since QUIC has zero-RTT connection establishment, the client can typically send a request (or any data) any time, without waiting for any sort of connection establishment. After the sender processed the request, it can send the response. QUIC controls how many packets can be sent via the congestion control, but typically, if the QUIC connection has been idle for some time, an initial window number of packets are allowed to be sent before the receiver acknowledges any. The initial window is typically 32 packets (however, negotiable by the endpoints). The first 10 packets are sent in burst, and the subsequent 22 packets, due to the nature of the QUIC protocol, are paced over a time interval. Now, if the IAP buffers some of these packets until the location information is resolved, multiple issues arise. First, again, the whole communication is delayed, which can have negative effect on the user experience, e.g. when QUIC is used for web downloads. Second, packets that were sent paced from the QUIC server (i.e. not in burst, but with some inter-packet time), will now be sent in burst from the IAP towards the UE, once its location is known. In case of congestion in the access network, the chances of losing packets increase (even the chance of bursty packet losses), and avoiding this was the reason why packet pacing was applied in the sender. Therefore, the advantage of packet pacing is lost. Third, as QUIC also measures RTT and keeps track of smoothed average and variation of RTT, the parameters can be slightly overestimated, similarly, as with TCP.

Fifthly, apart from the specific examples above, any transport protocol is affected by delays. Typically, after the UE switches to connected mode from idle mode, it will issue many requests in parallel, often towards multiple servers. This means that potentially one IAP will need to buffer packets for the same UE for several communication sessions. (And often, multiple IAPs 400 will need to buffer packets for the same UE.) In case there is a limitation in the buffer size, e.g. the number of packets that are buffered for a single UE is limited, or the total number of packets that are buffered in the IAP is limited, the IAP will have to drop packets that do not fit into the buffer. This packet loss will e.g. seriously delay the connection establishment (e.g. with TCP) or in general, the response times, as packet loss has to be detected and re-sent by the transport protocol. In nearly all congestion control mechanisms, packet loss is treated as congestion, therefore the congestion window will be reduced, and as a consequence, the transfer speed will temporarily decrease, meaning that overall the transfer will be longer.

There is a significant difference in the environment of Fig 1 compared to today's EPC (Evolved Packet Core). In today's EPC, when the UE wants to send an uplink packet, or a number of uplink packets belonging to different flows, an idle-to-connected transition is made. As part of this process the GTP (GPRS (General Packet Radio Service) Tunnelling Protocol) tunnels are re-setup. After the packets are sent to their destinations, they will often trigger downlink packets. And due to the fact that the GTP tunnels have been re-setup, when the downlink packet comes everything is prepared and there is no buffering needed by the SGW (Serving Gateway). However, the architecture of Fig 1, the IAPs 400 do not know when an idle-to-connected transition occurs, whereby they cannot prepare for downlink packets in this case. So as in today's architecture, where buffering of downlink packets only happens when the servers intend to send something to an idle mode UE, in the anchorless/mobile service chaining architecture buffering is needed even after the UE has transitioned from idle to connected mode and start to receive downlink packets from the remote servers.

In order to address these problems, embodiments presented herein are used to preload location information of the wireless device in the IAP.

A number of new or modified nodes are added in Fig 1 compared to the prior art. A communication tracker (CT) 100 is a new service function 90 which is responsible for examining uplink packets. A location maintenance node (LMN) 200 is added which can be used to decide which IAP 400 to contact for preloading the location of a specific UE. A routing information node (RIN) 300 is responsible for collecting routing information, specifically information regarding which source IP addresses or IP prefixes are processed at which IAP 400. The IAP 400, with potentially added functionality of receiving control messages from the LMN 200 and querying the LR 500 after the trigger, if it does not already hold an entry for the specific UE. Also, an optional new interface can be added between the RIN 300 and the IAP 400.

Figs 2 to 4 are sequence diagrams illustrating communication between various entities of embodiments which can be applied in the environment of Fig 1 to preload location in the IAP 400. The communication can e.g. occur using IP packets, using any suitable protocol on higher layers, such as TCP.

Looking first to Fig 2, this illustrates an embodiment where the LR 500 does not need to be modified.

Here, the UE transmits an uplink packet 10 to the CT 100, the uplink packet 10 being intended for a remote device. The routing to the CT can be done by tagging in the uplink classifier 8.

The UE 2 transmits an uplink packet 10 to the CT 100 which transmits a new connection message 12 to the LMN 200. The uplink packet contains the source IP address and the destination IP address.

When the LMN 200 does not know which IAP to contact for preloading location of the UE, the LMN 200 transmits an IAP address request 13 to the RIN 300 which responds with an IAP address response 14 containing the address of one or more IAPs 400 associated with the UE 2.

Now the LMN 200 has the address of the IAP 400 in question and transmits a preload command 15 to the IAP 400 in question.

After receiving the preload command 15, the IAP 400 checks if the location of the UE 2 is already stored. If this is not the case, the IAP 550 requests the location of the UE 2 in a UE location request 17 to the LR 500, to which the LR 500 responds with a UE location response message 18. Once the IAP 400 has obtained the location of the UE 2, it stores 19 the location, making the preloading complete.

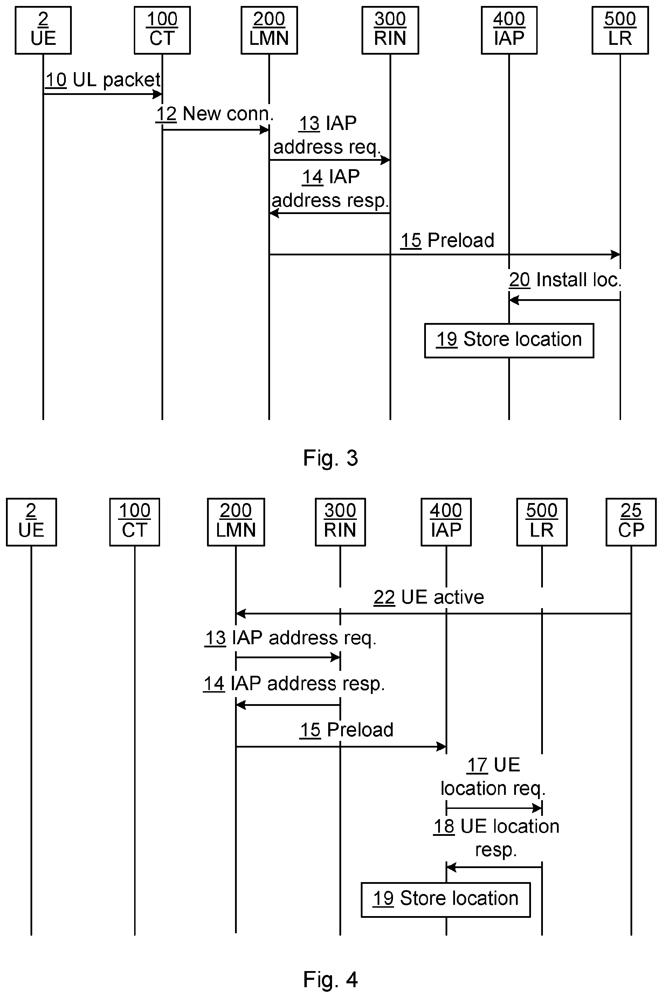

Looking now to Fig 3, the process is slightly different from Fig 2 from the preload command 15 and later. Here, the preload command 15 (now comprising the address of the IAP 400 for the UE) is transmitted to the LR 500. If the LR 500 finds that the IAP 400 in question does not have the location of the UE 2 stores, the LR 500 then retrieves the location of the UE 2 and transmits the location in an install location message 20 to the IAP 400 in question. The IAP 400 then stores 19 the location for the UE 2.

Looking now to Fig 4, the part before the IAP address request 13 is slightly different compared to the procedure of Fig 2. Here, instead of preloading based on an UL packet, the preloading is triggered by the LMN 200 receiving a UE active signal 22 from a core network 25. The UE active signal 22 can be that the UE has attached to the network or that the UE ha transitioned from an idle state to a connected state.

It is to be noted that the part prior to the IAP address request 13 of Fig 4 could equally well be applied with the latter part of Fig 3.

It is to be noted that the processing for each one of the nodes of Figs 2-4 are described in more detail with reference to the flow charts below.

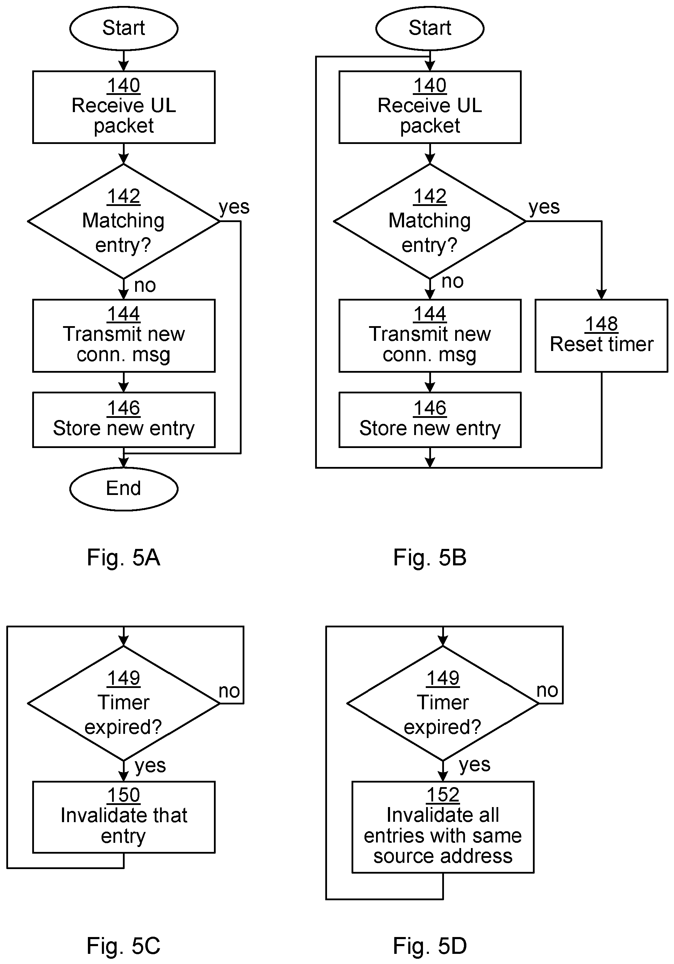

Figs 5A-D are flow charts illustrating methods performed in a CT for assisting preloading of a location of a wireless device. In one embodiment, the CT can be implemented in a service function which is routed to using a tag of the uplink packet. First, the method illustrated by Fig 5A will be described.

In a *receive UL packet* step 140, an uplink packet is received. The uplink packet originates from a wireless device and comprises a source address and a destination address.

In a conditional *matching entry* step 142, it is determines whether or not a connection database comprises a matching entry corresponding to both the source address and the destination address. If there is a matching entry, the method ends. Otherwise, the method proceeds to a *transmit new connection message* step 144.

In the *transmit new connection message* step 144, a new connection message is transmitted, e.g. to the location management node 200.

In a *store new entry* step 146, a new entry is stored in the connection database. The new entry comprises both the source address and the destination address.

Looking now to Fig 5B, only new or modified steps compared to Fig 5A will be described. In this embodiment, when there is a matching entry found in step 142, the method proceeds to a reset timer step 148.

The conditional *matching entry* step 142 may comprise disregarding any entries in the connection database which have expired.

Furthermore, in this embodiment, when step 142 does find a matching entry, the method proceeds to an optional *reset timer* step 148.

In the optional *reset timer* step 148, a timer for the matching connection entry is reset.

Looking now to Fig 5C, only new or modified steps compared to Fig 5A will be described. The steps of Fig 5C can be executed in a parallel process to the methods of Figs 5A-B.

In an optional conditional *timer expired* step 149, it is checked whether a timer for an entry has expired. If this is the case, the method proceeds to an optional *invalidate that entry* step 150. Otherwise, the method re-executes this step, optionally after a delay (not shown).

In the optional *invalidate that entry* step 150, any entry in the connection database for which the timer has expired is invalidated.

This method may process may process many entries at once or one entry at a time.

Looking now to Fig 5D, only new or modified steps compared to Fig 5C will be described.

Here, if the timer has expired, the method proceeds to an optional *invalidate all entries with the same source address* step 152.

In the optional *invalidate all entries with the same source address* step 152, all entries for the source address of the expired entry are invalidated.

The behaviour of the CT are detailed in the following embodiments. Uplink packets, sent from the UE to remote devices in the Internet should pass through CT. Hence, the uplink classifier is configured so that the packets are tagged in a way that CT is visited. In any case, the CT forwards the packets towards the destination, after processing the packet, as described below.

The CT maintains an internal table with source and destination IP address pairs which communicate with each other. When the CT receives a packet (step 140), it reads both the source (UE) and destination (remote device) IP addresses in the IP header. Then it checks (step 142) whether the (source IP address, destination IP address) pair is present in its internal table. If not, the CT adds (step 146) the (source IP address, destination IP address) pair into its internal table and informs the LMN about the IP address pair, by sending (step 144) a new connection message.

In one embodiment, there is a timer associated for each table entry in the CT. The timer is started whenever an entry is installed in the table, and restarted any time the CT receives a packet with the same source and destination IP address pair. The timer can be set to a small value, e.g. a few seconds, and can correspond to the inactivity timer duration, which is usually set to ten seconds in the operator's networks. (The UE-specific inactivity timer runs in the base station and after it expires, the UE moves to idle mode. The inactivity timer is restarted any time the UE has some data packets to send or receive). As an optimization, the timer is run in the CT per-UE, and upon expiration, all the entries that correspond to the specific UE are invalidated (step 152). The need for this timer can be explained by taking into account the typical operation of the IAP that the location information of the UE is removed from the local cache after a time-out, or after the UE moves to idle mode, i.e. after the expiration of the inactivity timer.

In one embodiment, the control plane informs the CT about the event where a UE changed from connected to idle mode. After receiving this trigger, the CT removes all of those entries from the table, where the source IP address correspond to the IP address of the UE that changed from connected to idle mode.

As described above, all uplink packets pass through the CT. In a possible deployment variant, the uplink classifier examines the transport protocol of the uplink packet. If the transport protocol is not TCP, every packet is sent to the discussed CT. If the transport protocol is TCP, then only the SYN packets are sent to the CT.

The UE-specific state of the CT instance may be moved to a new CT instance, after UE handover. However, this is not strictly required and a new CT instance can start to function without relocation of state. The new Communication Tracker instance will build its internal table the same way as described above.

Yet another embodiment of the CT is to co-locate the functionality with another service function. This could typically be the case when all outgoing packets must pass through a NAT (Network Address Translation) or a firewall.

Fig 6 is a flow chart illustrating methods performed in a LMN for assisting preloading of a location of a wireless device.

In a *receive update indication* step 240, an indication to preload a location is received. Optionally, the indication is in the form of a new connection message (12 of Fig 2 and 3), from a CT.

Optionally, the indication is in the form of an indication (22 of Fig 4) that the wireless device has transitioned to a connected state from an inactive state. Such an indication (22 of Fig 4) could also be in the form of an indication that the wireless device has attached to mobile communication network.

In a *determine IAP address* step 242, an address of an address announcement server associated with the wireless device is determined. Optionally, this comprises requesting the address from a RIN (13, 14 of Figs 2-4).

In a *transmit preload command* step 244, a preload command is transmitted. The preload command indicates to the receiver to trigger a preload of a location of the wireless device.

In one embodiment (see e.g. Fig 2), step 244 comprises transmitting the preload command to the address announcement server (IAP). In one embodiment (see e.g. Fig 3) comprises transmitting the preload command to the LR.

The behaviour of the LMN is detailed in the following embodiments. The LMN is responsible for making decisions about which IAPs have to install location for which UEs.

The LMN receives (240) a control message from the CT. The message contains a UE IP address (source IP address in the uplink packet) and a remote device's IP address (destination IP address in the uplink packet). The LMN contacts (in step 242) the RIN and asks about the IAP(s) where the packets from this peer's IP address are expected to be processed. Please note that in case the IAPs are advertising the whole address range, there is no need to send the UE IP address in this message.

Note that if the IAPs advertise mutually disjoint address ranges, meaning that there is only one IAP that serves the UE, the above described step (step 242) simply involves determining the IAP address based solely on the UE IP address.

After retrieving the IAP(s) where the packets for the corresponding flow are expected to pass through, the LMN will (in step 244) contact either the IAP(s) as in Fig 2 or the LR as in Fig 3.

When contacting the IAP, the LMN sends a preload command to the IAP(s). The preload command includes the IP address of the UE and its semantics is such that the IAP is expected to proactively install location in its local cache about the UE holding the IP address.

When contacting the LR, the LMN sends a preload command to the LR. The preload command includes the IP address of the UE and the IAP id(s) and its semantics are such that the IAP is (or the IAPs are) expected to proactively install location in its local cache about the UE holding the IP address.

Figs 7A-B are flow charts illustrating methods performed in a RIN for assisting preloading of a location of a wireless device. First, the method illustrated by Fig 7A will be described.

In a *receive IAP address request* step 340, a request for an address of an address announcement server is received. The address announcement server is associated with a wireless device as described above, i.e. to make the location of the UE available for downlink traffic. The request is received from a LMN and comprises an address of a remote device.

Optionally, the request further comprises an address of the wireless device,

In a *determine IAP address* step 342, an address of the address announcement server is determined based on the address of the remote device by querying an allocation database. The allocation database keeps information as to which IAP serves which IP address range. For instance, the allocation database can be implemented within the RIN.

Optionally, this step comprises determining respective addresses for a plurality of address announcements servers, wherein all of the plurality of address announcement servers are associated with the wireless device.

When the request of step 340 comprises the address of the wireless device, this step comprises determining the address also based on the address of the wireless device.

In a *transmit IAP address* step 344, the determined address (or addresses) of the address announcement server(s) are transmitted to the LMN.

Looking now to Fig 7B, only new or modified steps compared to Fig 7A will be described. This method can be performed by the RIN 300 in a process in parallel to the method shown in Fig 7A and described above.

In an optional *receive allocation message* step 346, an allocation message is received from an address announcement server. The allocation message comprises an address of a remote device and an address of the address announcement server.

Optionally, the allocation message further comprises the address of the wireless device.

In an optional *store entry* step 348, an entry is stored in the allocation database based on the address of the remote device and the address of the address announcement server. In one embodiment, this comprises storing an entry corresponding to a range of remote device addresses, wherein the range of remote addresses comprises the address of the remote device.

When the allocation message of step 346 comprises the address of the wireless device, this step comprises storing an entry based on the address of the wireless device.

The behaviour of the RIN is detailed in the following embodiments. The RIN is responsible for learning routing information, specifically it aims to understand which source IP addresses' incoming (downlink) packets are processed at which IAPs.

In one configuration of the anchorless/mobile service chaining architecture, each border router advertises the whole address range that is reserved for UEs in the operator's network. This means that packets from the Internet (downlink packets) destined to a specific UE can enter at any border router, independent of the UE's IP address. Simply put, only the destination IP address, the interconnection of ASes (Autonomous Systems) (topology) and routing policies in and between other ASes will determine which border router the packets will arrive at. Furthermore, in a typical configuration of the anchorless/mobile service chaining architecture, IAPs also advertise the whole address range, meaning that they are willing to process packets destined to any UE in the network. Typically, in this setting, the border router receiving the packet will forward it to the closest IAP.

The RIN is configured (or notified) to know which of the abovementioned configuration is used in the network, and if IAP's have specific address ranges (i.e. they are advertising a part of the address space and not the whole address range), the address ranges are also known at the RIN.

The RIN holds a table (called "IAP table") for every UE IP address range, where the ranges are calculated so that for each UE IP address range the RIN will know which IAPs are responsible.

The RIN receives control messages (step 340) from the IAPs, containing a UE IP and a remote device's IP address (source IP address), and also the sending IAP's identity (e.g. its identifier), which is described in the following section. The semantic of the message is the following: the IAP entity (identified by its identity) received and processed downlink packets, where the source IP address is the remote device's IP address and the destination IP address is the UE IP address.

Upon receiving this message, the RIN does the following:
- First, it checks the UE IP address and determines which address range it belongs to
- Then, the RIN checks the corresponding IAP table to see if the remote device's IP address is present in the table. It might be present in more than one entries meaning that there is load balancing in the routing procedure (or routing changes). If it does not find, it creates a table entry with the following triplet: (remote device's IP address, IAP's identity, timestamp), where the timestamp is reflecting the current time. If there is an already existing entry, it checks the entry and checks the IAP identity in the entry (or entries). If the IAP identity in the control message is the same as in its IAP table entry (or in one of the entries), then the timestamp is refreshed for that table entry. If the IAP identity is different (from any of the IAP identities in the corresponding entries), a new entry is created with the following triplet: (remote device's IP address, IAP's identity, timestamp), where the timestamp is reflecting the current time.

In one embodiment, the table entries are aggregated, and instead of IP addresses of remote devices, the RIN will hold an IP prefix for each entry, meaning that every remote IP address having the same prefix is processed in the same IAP.

As mentioned above, there may be multiple entries in each table for the same remote IP address (or the remote prefix). This for e.g. could indicate that load balancing is executed at the routing layer, or there is a change in the routing. To be able to cater for routing changes, the RIN can periodically go through the table entries in the IAP table and removes those entries whose timestamp is greater than a threshold value.

The general description above is valid for any configuration with regards to the IAPs advertised address ranges. However, in one scenario, where each IAP is advertising the whole address range, only one table is needed to be maintained, thus the storage requirements are greatly reduced. In this case, the message from the IAP to the RIN does not need to contain the UE IP address.

In another embodiment, the RIN learns the routing information by static configuration. In this variant, the IAP tables have been pre-configured manually by operations personnel. In one example, an operator hosts a set of servers for an enterprise customer. The operator has assigned a certain address range for the servers of that customer. All traffic from those servers passes a specific IAP. In this case, the IAP table can be pre-configured in the RIN.

In another embodiment, the operator may know, based on peering agreements, that certain IP addresses always need to pass a certain peering site. In this case, only the IAPs in those sites will handle downlink packets from those IP addresses. This can be statically configured once, and there is no need for real-time signaling between IAP and RIN.

The RIN receives (step 340) messages from the LMN asking for the information regarding the IAP(s) that will need to have location state for the given UE. This control message contains a remote device IP address and a UE IP address. Upon receiving this control message, the RIN first examines the UE IP address and determines which address range it belongs to and checks the corresponding IAP table. It looks up the remote device IP address (step 342) and selects those entries which correspond to that. As discussed previously, there may be multiple entries. After finding the entry/entries, the RIN informs (step 344) the LMN by adding the IAP identities (e.g. IAP identifier) to the reply message.

Again, if each IAP is advertising the whole address range, this control message from the LMN may not contain the UE IP address.

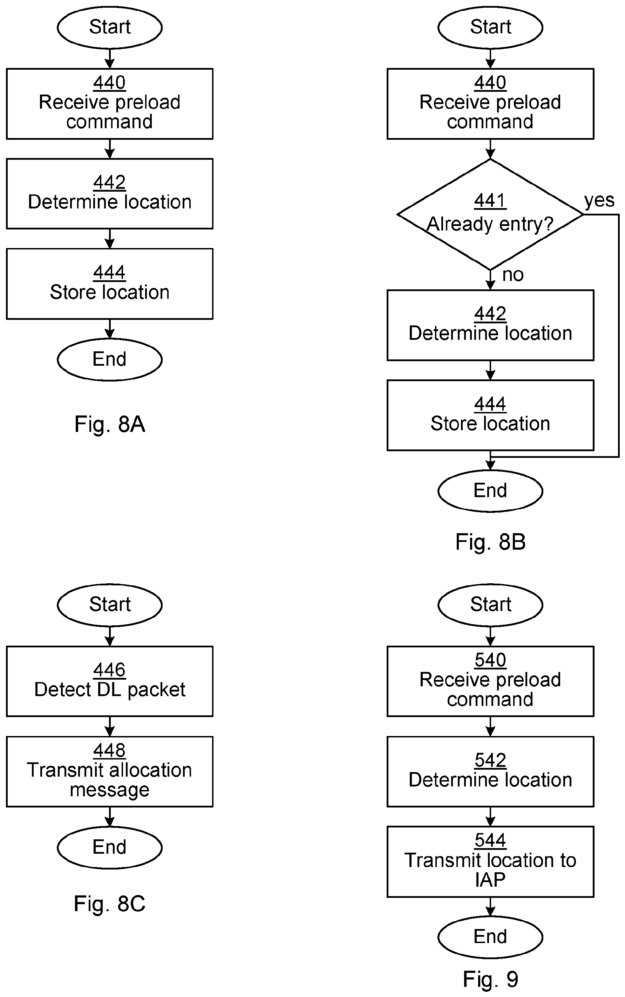

Figs 8A-C are flow charts illustrating methods performed in an address announcement server for assisting resource allocation transfer performed in service function node at the target site. First, the method illustrated by Fig 8A will be described.

In a *receive preload command* step 440, a preload command is received. The preload command comprises an identifier of the wireless device.

Optionally, the preload command further comprises the location of the wireless device.

In a *determine location* step 442, a location of the wireless device is determined. Optionally, this step comprises requesting the location of the wireless device from the LR.

When the preload command comprises the location of the wireless device, this step comprises reading the location from the preload command.

In a *store location* step 444, the location of the wireless device is stored in a location database.

Looking now to Fig 8B, only new or modified steps compared to Fig 8A will be described.

In an optional conditional *already entry* step 441, it is checked whether there is an entry for the wireless device in the location database already. If this is the case, the method ends. Otherwise, the method proceeds to the *determine location* step 442.

Looking now to Fig 8C, only new or modified steps compared to Fig 8A will be described. These steps relate to downlink traffic and may be performed in a separate process compared to the methods illustrated in Figs 8A-B.

In an optional *detect DL packet* step 446, a downlink packet destined for a wireless device is detected.

In an optional *transmit allocation message* step 448, an allocation message is transmitted to a RIN. The allocation message comprises an address of a source device of the downlink packet and an address of the address announcement server. Optionally, the allocation message further comprises the address of the wireless device.

The behaviour of the IAP is detailed in the following. The IAP may receive (in step 440) messages from the LMN, where an IP address of a UE is present. The semantics of the preload command is a request from the LMN to install location information about the UE in the local cache of the IAP, as incoming packets are soon expected to arrive to this IAP destined to the UE. Upon receiving this message, the IAP determines location (step 442). First, the IAP checks whether it holds an entry in its local cache about the UE. If yes, it does nothing. If no, it contacts the LR, and queries the location of the UE holding the IP address. Upon receiving the response from the LR, the IAP stores (step 444) the entry in its local cache.

The second new functionality is informing the RIN about actual source IP addresses it processed packets for, if the RIN learns the routing information dynamically. When receiving a downlink packet (step 446) from a remote device in the Internet, the IAP performs its usual operation (checking the UE's location, either in the local cache, or after querying the LR), and adds the UE location to the packet and forwards it further downlink. Also, as a novel step (but not after receiving every packet, see later), the IAP sends a notification message (step 448) to the RIN, including the source (remote device) IP address and the destination (UE) IP address. Adding the UE IP address is not mandatory if the network is configured so that all IAPs advertise the whole address range. It is important to note that the message about the IP address does not need to be sent to the RIN after every downlink packet as this would mean a lot of unnecessary signaling overhead. To solve this problem, the IAP records the IP address in a table and starts a timer associated with this entry. When the timer expires, the associated entry is deleted. As a novel step, the control message to the RIN is sent only if the (remote device) IP address does not exist in the table.

Fig 9 is a flow chart illustrating methods performed in a LR for assisting preloading of a location of a wireless device.

In a *receive preload command* step 540, a preload command comprising an identifier of the wireless device is received.

In a *determine location* step 542, a location of the wireless device is determined.

In a *transmit location to IAP* step 544, the location of the wireless device is transmitted to an address announcement server for storing in a location database.

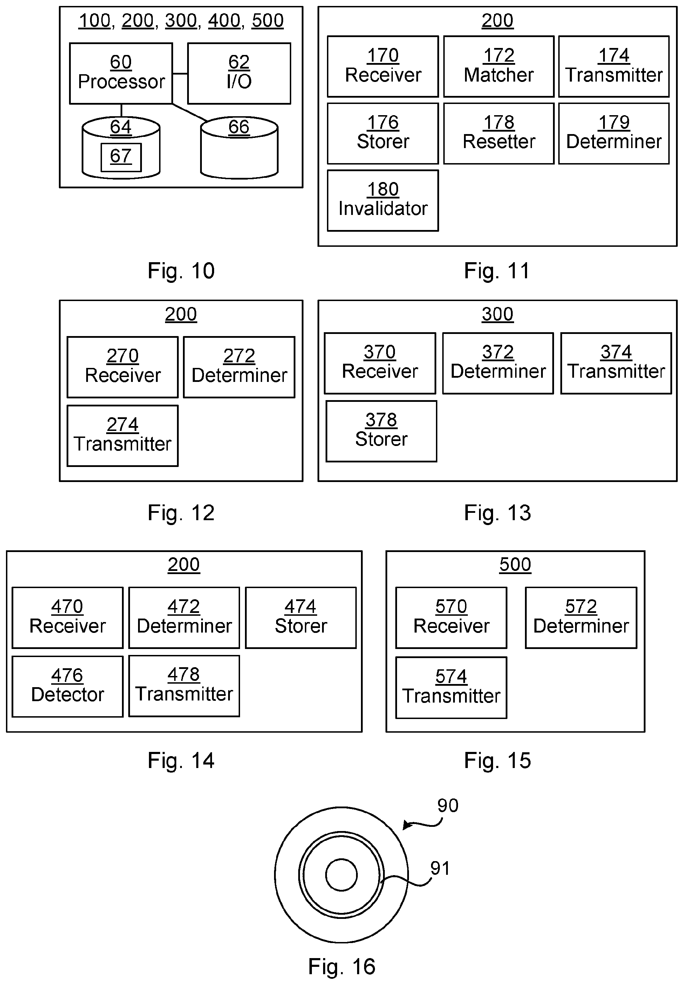

Fig 10 is a schematic diagram illustrating components of any one of the CT, LMN, a RIN, address announcement server (IAP), and LR of Fig 1, here represented by a single node.

A processor 60 is provided using any combination of one or more of a suitable central processing unit (CPU), multiprocessor, microcontroller, digital signal processor (DSP), application specific integrated circuit etc., capable of executing software instructions 67 stored in a memory 64, which can thus be a computer program product. The processor 60 can be configured to execute the method described with reference to Fig 7 above. The memory 64 can be any combination of read and write memory (RAM) and read only memory (ROM). The memory 64 also comprises persistent storage, which, for example, can be any single one or combination of magnetic memory, optical memory, solid state memory or even remotely mounted memory.

A data memory 66 is also provided for reading and/or storing data during execution of software instructions in the processor 60. The data memory 66 can be any combination of read and write memory (RAM) and read only memory (ROM).

The node further comprises an I/O interface 62 for communicating with other external entities. Optionally, the I/O interface 62 also includes a user interface.

Fig 11 is a schematic diagram showing functional modules of the CT of Fig 1. A receiver 170 is operable to perform step 140. A matcher 172 is operable to perform step 142. A transmitter 174 is operable to perform step 144. A storer 176 is operable to perform step 146. A resetter 178 is operable to perform step 148. A determiner 179 is operable to perform step 149. An invalidator 180 is operable to perform steps 150 and 152.

Fig 12 is a schematic diagram showing functional modules of the LMN of Fig 1. A receiver 270 is operable to perform step 240. A determiner 272 is operable to perform step 242. A transmitter 274 is operable to perform step 244.

Fig 13 is a schematic diagram showing functional modules of the RIN of Fig 1. A receiver 370 is operable to perform steps 340 and 346. A determiner 372 is operable to perform step 342. A transmitter 374 is operable to perform step 344. A storer 378 is operable to perform step 348.

Fig 14 is a schematic diagram showing functional modules of the address announcement server (IAP) of Fig 1. A receiver 470 is operable to perform step 440. A determiner 472 is operable to perform steps 442 and 441. A storer 474 is operable to perform step 444. A detector 476 is operable to perform step 446. A transmitter 478 is operable to perform step 448.

Fig 15 is a schematic diagram showing functional modules of the LR of Fig 1. A receiver 570 is operable to perform step 540. A determiner 572 is operable to perform step 542. A transmitter 574 corresponds to step 544.

Fig 16 shows one example of a computer program product comprising computer readable means. On this computer readable means a computer program 91 can be stored, which computer program can cause a processor to execute a method according to embodiments described herein. In this example, the computer program product is an optical disc, such as a CD (compact disc) or a DVD (digital versatile disc) or a Blu-Ray disc. As explained above, the computer program product could also be embodied in a memory of a device, such as the computer program product 64 of Fig 10. While the computer program 91 is here schematically shown as a track on the depicted optical disk, the computer program can be stored in any way which is suitable for the computer program product, such as a removable solid state memory, e.g. a Universal Serial Bus (USB) drive.

With the embodiments presented herein, the problem of buffering some downlink packets is eliminated or at least reduced. Hence, the communication is not delayed, implying improved user experience (e.g. in terms of latency, web page download times, etc.). The transport protocols that rely on measuring the round-trip times are not affected negatively; therefore good user experience can be maintained. Besides this, less memory is needed for buffering in the IAPs, leading to a more cost-efficient product.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for assisting preloading of a location of a wireless device (2) of a mobile communication network (9), the method being performed in a location maintenance node, LMN, (200) and comprising the steps of:
receiving (240) an indication to preload a location of the wireless device (2);
determining (242) an address of an address announcement server, denoted IP announcement server, IAP (400) associated with the wireless device (2); and
transmitting (244) a preload command, the preload command indicating to trigger a preload of a location of the wireless device (2), the preload command causing the address announcement server, IAP, (400) to install location information about the wireless device (2) in a local cache, as incoming packets are soon expected to arrive to the address announcement server, IAP, (400) destined to the wireless device (2), wherein the step of transmitting (244) the preload command comprises transmitting the preload command to the address announcement server and/or to the location register (500).

2. The method according to claim 1, wherein the step of receiving (240) the indication comprises receiving the indication, in the form of a new connection message, from a communication tracker (100).

3. The method according to claim 1, wherein the step of receiving (240) the indication comprises receiving the indication, in the form of an indication that the wireless device has transitioned to a connected state from an inactive state.

4. The method according to claim 1, wherein the step of receiving (240) the indication comprises receiving the indication, in the form of an indication that the wireless device has attached to mobile communication network (9).

5. The method according to any one of claims 1 to 4, wherein the step of determining (242) the address comprises requesting the address from a routing information node.

6. A location maintenance node, LMN, (200) comprising:
means for receiving an indication to preload a location of a wireless device (2);
means for determining an address of an address announcement server, denoted by IP announcement server, IAP, (400) associated with the wireless device (2); and
means for transmitting a preload command, the preload command indicating to trigger a preload of a location of the wireless device (2), the preload command causing the address announcement server, IAP, (400) to install location information about the wireless device (2) in a local cache, as incoming packets are soon expected to arrive to the address announcement server, IAP, (400) destined to the wireless device (2), wherein transmitting the preload command comprises transmitting the preload command to the address announcement server and/or to the location register (500).

7. A computer program (66, 91) for assisting preloading of a location of a wireless device (2) of a mobile communication network (9), the computer program comprising computer program code which, when run on the location maintenance node, LMN, (200) causes the location maintenance node, LMN, (200) to:
receive an indication to preload a location of the wireless device (2);
determine an address of an address announcement server, denoted IP announcement server, IAP, (400) associated with the wireless device (2); and
transmit a preload command, the preload command indicating to trigger a preload of a location of the wireless device (2), the preload command causing the address announcement server, IAP, (400) to install location information about the wireless device (2) in a local cache, as incoming packets are soon expected to arrive to the address announcement server, IAP, (400) destined to the wireless device (2), wherein transmitting the preload command comprises transmitting the preload command to the address announcement server and/or to the location register (500).

8. A computer program product (64, 90) comprising a computer program according to claim 7 and a computer readable medium on which the computer program is stored.

9. A method for assisting preloading of a location of a wireless device (2) of a mobile communication network (9), the method being performed in an address announcement server, denoted IP announcement server, IAP, (400) and comprising the steps of:
receiving (440) a preload command comprising an identifier of the wireless device (2) from a location maintenance node, LMN, (200);
determining (442) a location of the wireless device (2); and
storing (444) the location information of the wireless device (2) in a local cache, as incoming packets are soon expected to arrive to the address announcement server, IAP, (400) destined to the wireless device (2).

10. An address announcement server, denoted IP announcement server, IAP, (400) comprising:
means for receiving a preload command comprising an identifier of a wireless device (2) from a location maintenance node, LMN, (200);
means for determining a location of the wireless device (2); and
means for storing the location of the wireless device (2) in a local cache, as incoming packets are soon expected to arrive to the address announcement server, IAP, (400) destined to the wireless device (2).

11. A computer program (66, 91) for assisting preloading of a location of a wireless device (2) of a mobile communication network (9), the computer program comprising computer program code which, when run on a process of the address announcement server, denoted IP announcement server, IAP, (400) causes the address announcement server, IAP, (400) to:
receive a preload command comprising an identifier of the wireless device (2) from a location maintenance node, LMN, (200);
determine a location of the wireless device (2); and
store the location of the wireless device (2) in a local cache, as incoming packets are soon expected to arrive to the address announcement server, IAP, (400) destined to the wireless device (2).

12. A method for assisting preloading of a location of a wireless device (2) of a mobile communication network (9), the method being performed in a location register, LR, (500) and comprising the steps of:
receiving (540) a preload command comprising an identifier of the wireless device (2) from a location maintenance node, LMN, (200);
determining (542) the location of the wireless device (2); and
transmitting (544) the location of the wireless device (2) to an address announcement server, denoted IP announcement server IAP, (400) for storing in a local cache, as incoming packets are soon expected to arrive to the address announcement server, IAP, (400) destined to the wireless device (2).

13. A location register, LR, (500) comprising:
means for receiving a preload command comprising an identifier of a wireless device (2) from a location maintenance node, LMN, (200);
means for determining the location of the wireless device (2); and
means for transmitting the location of the wireless device (2) to an address announcement server, denoted IP announcement server, IAP, (400) for storing in a local cache, as incoming packets are soon expected to arrive to the address announcement server, IAP, (400) destined to the wireless device (2).

## Patentansprüche

1. Verfahren zum Unterstützen des Vorladens eines Standorts eines drahtlosen Geräts (2) eines Mobilfunknetzes (9), wobei das Verfahren in einem Standortverwaltungsknoten, LMN, (200) durchgeführt wird und die Schritte umfasst:
Empfangen (240) einer Benachrichtigung zum Vorladen eines Standorts des drahtlosen Geräts (2);
Ermitteln (242) einer Adresse eines Adressankündigungsservers, bezeichneter IP-Ankündigungsserver, IAP (400), der dem drahtlosen Gerät (2) zugeordnet ist; und
Senden (244) eines Vorladebefehls, wobei der Vorladebefehl angibt, ein Vorladen eines Standorts des drahtlosen Geräts auszulösen (2), wobei der Vorladebefehl den Adressankündigungsserver, IAP, (400) veranlasst, Standortinformationen über das drahtlose Gerät (2) in einem lokalen Zwischenspeicher einzuspielen, wenn erwartet wird, dass eingehende Pakete mit dem drahtlosen Gerät (2) als Ziel bald am Adressankündigungsserver, IAP, (400) eingehen, wobei der Schritt des Sendens (244) des Vorladebefehls das Senden des Vorladebefehls an den Adressankündigungsserver und/oder das Standortregister (500) umfasst.

2. Verfahren nach Anspruch 1, wobei der Schritt des Empfangens (240) der Benachrichtigung das Empfangen der Benachrichtigung in Form einer Neue-Verbindung-Nachricht von einem Kommunikationstracker (100) umfasst.

3. Verfahren nach Anspruch 1, wobei der Schritt des Empfangens (240) der Benachrichtigung das Empfangen der Benachrichtigung in Form einer Benachrichtigung umfasst, dass das drahtlose Gerät von einem inaktiven Zustand in einen verbundenen Zustand übergegangen ist.

4. Verfahren nach Anspruch 1, wobei der Schritt des Empfangens (240) der Benachrichtigung das Empfangen der Benachrichtigung in Form einer Benachrichtigung umfasst, dass sich das drahtlose Gerät mit dem Mobilfunknetz (9) verbunden hat.

5. Verfahren nach einem der Ansprüche 1 bis 4, wobei der Schritt des Ermittelns (242) der Adresse das Anfordern der Adresse von einem Weiterleitungsinformationsknoten umfasst.

6. Standortverwaltungsknoten, LMN, (200), umfassend:
Mittel zum Empfangen einer Benachrichtigung zum Vorladen eines Standorts eines drahtlosen Geräts (2);
Mittel zum Ermitteln einer Adresse eines Adressankündigungsservers, der von einem IP-Ankündigungsservers, IAP, (400) bezeichnet wird, der dem drahtlosen Gerät (2) zugeordnet ist; und
Mittel zum Senden eines Vorladebefehls, wobei der Vorladebefehl angibt, ein Vorladen eines Standorts des drahtlosen Geräts auszulösen (2), wobei der Vorladebefehl den Adressankündigungsserver, IAP, (400) veranlasst, Standortinformationen über das drahtlose Gerät (2) in einem lokalen Zwischenspeicher einzuspielen, wenn erwartet wird, dass eingehende Pakete mit dem drahtlosen Gerät (2) als Ziel bald am Adressankündigungsserver, IAP, (400) eingehen, wobei das Sendens des Vorladebefehls das Senden des Vorladebefehls an den Adressankündigungsserver und/oder das Standortregister (500) umfasst.

7. Computerprogramm (66, 91) zur Unterstützung des Vorladens eines Standorts eines drahtlosen Geräts (2) eines Mobilfunknetzes (9), wobei das Computerprogramm einen Computerprogrammcode umfasst, der, wenn er auf dem Standortverwaltungsknoten, LMN, (200) ausgeführt wird, den Standortverwaltungsknoten, LMN (200), dazu veranlasst:
Empfangen einer Benachrichtigung zum Vorladen eines Standorts des drahtlosen Geräts (2);
Ermitteln einer Adresse eines Adressankündigungsservers, bezeichneter IP-Ankündigungsservers, IAP, (400), der dem drahtlosen Gerät (2) zugeordnet ist; und
Senden eines Vorladebefehls, wobei der Vorladebefehl angibt, ein Vorladen eines Standorts des drahtlosen Geräts auszulösen (2), wobei der Vorladebefehl den Adressankündigungsserver, IAP, (400) veranlasst, Standortinformationen über das drahtlose Gerät (2) in einem lokalen Zwischenspeicher einzuspielen, wenn erwartet wird, dass eingehende Pakete mit dem drahtlosen Gerät (2) als Ziel bald am Adressankündigungsserver, IAP, (400) eingehen, wobei das Sendens des Vorladebefehls das Senden des Vorladebefehls an den Adressankündigungsserver und/oder das Standortregister (500) umfasst.

8. Computerprogrammprodukt (64, 90), umfassend ein Computerprogramm nach Anspruch 7 und ein computerlesbares Medium, auf dem das Computerprogramm gespeichert ist.

9. Verfahren zum Unterstützen des Vorladens eines Standorts eines drahtlosen Geräts (2) eines Mobilfunknetzes (9), wobei das Verfahren in einem Adressankündigungsserver, bezeichneter IP-Ankündigungsserver, IAP, (400) durchgeführt wird und die Schritte umfasst:
Empfangen (440) eines Vorladebefehls, der eine Kennung des drahtlosen Geräts (2) umfasst, von einem Standortverwaltungsknoten, LMN, (200);
Ermitteln (442) eines Standorts des drahtlosen Geräts (2); und
Speichern (444) der Standortinformationen des drahtlosen Geräts in einem lokalen Zwischenspeicher, wenn erwartet wird, dass eingehende Pakete mit dem drahtlosen Gerät (2) als Ziel bald am Adressankündigungsserver, IAP, (400) eingehen.

10. Adressankündigungsserver, bezeichneter IP-Ankündigungsserver, IAP (400), umfassend:
Mittel zum Empfangen eines Vorladebefehls, der eine Kennung eines drahtlosen Geräts (2) umfasst, von einem Standortverwaltungsknoten, LMN, (200);
Mittel zum Ermitteln eines Standorts des drahtlosen Geräts (2); und
Mittel zum Speichern des Standorts des drahtlosen Geräts (2) in einem lokalen Zwischenspeicher, wenn erwartet wird, dass eingehende Pakete mit dem drahtlosen Gerät (2) als Ziel bald am Adressankündigungsserver, IAP, (400) eingehen.

11. Computerprogramm (66, 91) zur Unterstützung des Vorladens eines Standorts eines drahtlosen Geräts (2) eines Mobilfunknetzes (9), wobei das Computerprogramm einen Computerprogrammcode umfasst, der, wenn er bei einem Prozess des Adressankündigungsservers, bezeichneter IP-Ankündigungsserver, IAP, (400) ausgeführt wird, den Adressankündigungsserver, LMN (400), dazu veranlasst:
Empfangen eines Vorladebefehls, der eine Kennung des drahtlosen Geräts (2) umfasst, von einem Standortverwaltungsknoten, LMN, (200);
Ermitteln eines Standorts des drahtlosen Geräts (2); und
Speichern des Standorts des drahtlosen Geräts (2) in einem lokalen Zwischenspeicher, wenn erwartet wird, dass eingehende Pakete mit dem drahtlosen Gerät (2) als Ziel bald am Adressankündigungsserver, IAP, (400) eingehen.

12. Verfahren zum Unterstützen des Vorladens eines Standorts eines drahtlosen Geräts (2) eines Mobilfunknetzes (9), wobei das Verfahren in einem Standortregister, LR, (500) durchgeführt wird und die Schritte umfasst:
Empfangen (540) eines Vorladebefehls, der eine Kennung des drahtlosen Geräts (2) umfasst, von einem Standortverwaltungsknoten, LMN, (200);
Ermitteln (542) des Standorts des drahtlosen Geräts (2); und
Senden (544) des Standorts des drahtlosen Geräts an einen Adressankündigungsserver, bezeichneter IP-Ankündigungsserver, IAP, (400) zum Speichern in einem lokalen Zwischenspeicher, wenn erwartet wird, dass eingehende Pakete mit dem drahtlosen Gerät (2) als Ziel bald am Adressankündigungsserver, IAP, (400) eingehen.

13. Standortregister, LR, (500), umfassend:
Mittel zum Empfangen eines Vorladebefehls, der eine Kennung eines drahtlosen Geräts (2) umfasst, von einem Standortverwaltungsknoten, LMN, (200);
Mittel zum Ermitteln des Standorts des drahtlosen Geräts (2); und
Mittel zum Senden des Standorts des drahtlosen Geräts an einen Adressankündigungsserver, bezeichneter IP-Ankündigungsserver, IAP, (400) zum Speichern in einem lokalen Zwischenspeicher, wenn erwartet wird, dass eingehende Pakete mit dem drahtlosen Gerät (2) als Ziel bald am Adressankündigungsserver, IAP, (400) eingehen.

## Revendications

1. Procédé d'assistance de préchargement de la localisation d'un dispositif sans fil (2) d'un réseau de communication mobile (9), le procédé étant exécuté dans un nœud de maintenance de localisation, LMN, (200) et comprenant les étapes suivantes :
la réception (240) d'une indication pour précharger une localisation du dispositif sans fil (2 ) ;
la détermination (242) d'une adresse d'un serveur d'annonce d'adresse, désigné par serveur d'annonce IP, IAP (400) associé au dispositif sans fil (2) ; et
la transmission (244) d'une commande de préchargement, la commande de préchargement indiquant de déclencher un préchargement d'une localisation du dispositif sans fil (2), la commande de préchargement amenant le serveur d'annonce d'adresse, IAP, (400) à installer des informations de localisation sur le dispositif sans fil (2) dans un cache local, étant donné que des paquets entrants sont attendus prochainement au serveur d'annonce d'adresse, IAP, (400) destinés au dispositif sans fil (2), dans lequel l'étape de transmission (244) de la commande de préchargement comprend la transmission de la commande de préchargement au serveur d'annonce d'adresse et/ou au registre de localisation (500).

2. Procédé selon la revendication 1, dans lequel l'étape de réception (240) de l'indication comprend la réception de l'indication, sous la forme d'un nouveau message de connexion, à partir d'un dispositif de suivi de communication (100).

3. Procédé selon la revendication 1, dans lequel l'étape de réception (240) de l'indication comprend la réception de l'indication, sous la forme d'une indication selon laquelle le dispositif sans fil est passé d'un état inactif à un état connecté.

4. Procédé selon la revendication 1, dans lequel l'étape de réception (240) de l'indication comprend la réception de l'indication, sous la forme d'une indication selon laquelle le dispositif sans fil s'est connecté au réseau de communication mobile (9).

5. Procédé selon l'une quelconque des revendications 1 à 4, dans lequel l'étape de détermination (242) de l'adresse comprend la demande de l'adresse à un nœud d'informations de routage.

6. Nœud de maintenance de localisation, LMN, (200) comprenant :
des moyens pour recevoir une indication pour précharger une localisation d'un dispositif sans fil (2 ) ;
des moyens permettant de déterminer une adresse d'un serveur d'annonce d'adresse, désigné par serveur d'annonce IP, IAP, (400) associé au dispositif sans fil (2) ; et
des moyens pour transmettre une commande de préchargement, la commande de préchargement indiquant de déclencher un préchargement d'une localisation du dispositif sans fil (2), la commande de préchargement amenant le serveur d'annonce d'adresse, IAP, (400) à installer des informations de localisation sur le dispositif sans fil (2) dans un cache local, étant donné que des paquets entrants sont attendus prochainement au serveur d'annonce d'adresse, IAP, (400) destinés au dispositif sans fil (2), dans lequel la transmission de la commande de préchargement comprend la transmission de la commande de préchargement au serveur d'annonce d'adresse et/ou au registre de localisation (500).

7. Programme informatique (66, 91) pour assister le préchargement d'une localisation d'un dispositif sans fil (2) d'un réseau de communication mobile (9), le programme informatique comprenant un code de programme informatique qui, lorsqu'il est exécuté sur le nœud de maintenance de localisation, LMN, (200), amène le nœud de maintenance de localisation, LMN, (200) à :
recevoir une indication pour précharger une localisation du dispositif sans fil (2 ) ;
déterminer une adresse d'un serveur d'annonce d'adresse, désigné par serveur d'annonce IP, IAP, (400) associé au dispositif sans fil (2) ; et
transmettre une commande de préchargement, la commande de préchargement indiquant de déclencher un préchargement d'une localisation du dispositif sans fil (2), la commande de préchargement amenant le serveur d'annonce d'adresse, IAP, (400) à installer des informations de localisation sur le dispositif sans fil (2) dans un cache local, étant donné que des paquets entrants sont attendus prochainement au serveur d'annonce d'adresse, IAP, (400) destinés au dispositif sans fil (2), dans lequel la transmission de la commande de préchargement comprend la transmission de la commande de préchargement au serveur d'annonce d'adresse et/ou au registre de localisation (500).

8. Produit de programme informatique (64, 90) comprenant un programme informatique selon la revendication 7 et un support lisible par ordinateur sur lequel le programme informatique est stocké.

9. Procédé pour assister le préchargement d'une localisation d'un dispositif sans fil (2) d'un réseau de communication mobile (9), le procédé étant réalisé dans un serveur d'annonce d'adresse, désigné par serveur d'annonce IP, IAP, (400) et comprenant les étapes consistant à :
recevoir (440) une commande de préchargement comprenant un identifiant du dispositif sans fil (2) en provenance d'un nœud de maintenance de localisation, LMN, (200 ) ;
déterminer (442) une localisation du dispositif sans fil (2) ; et
stocker (444) les informations de localisation du dispositif sans fil (2) dans un cache local, étant donné que des paquets entrants sont attendus prochainement au serveur d'annonce d'adresse, IAP, (400) destiné au dispositif sans fil (2).

10. Serveur d'annonce d'adresse, désigné par serveur d'annonce IP, IAP, (400) comprenant :
des moyens pour recevoir une commande de préchargement comprenant un identifiant d'un dispositif sans fil (2) à partir d'un nœud de maintenance de localisation, LMN, (200 ) ;
des moyens pour déterminer la localisation du dispositif sans fil (2) ; et
des moyens pour stocker la localisation du dispositif sans fil (2) dans un cache local, étant donné que des paquets entrants sont attendus prochainement au serveur d'annonce d'adresse, IAP, (400) destiné au dispositif sans fil (2).

11. Programme informatique (66, 91) pour assister le préchargement d'une localisation d'un dispositif sans fil (2) d'un réseau de communication mobile (9), le programme informatique comprenant un code de programme informatique qui, lorsqu'il est exécuté sur un processus du serveur d'annonce d'adresse, désigné par serveur d'annonce IP, IAP, (400), amène le serveur d'annonce d'adresse, IAP, (400) à :
recevoir une commande de préchargement comprenant un identifiant du dispositif sans fil (2) à partir d'un nœud de maintenance de localisation, LMN, (200 ) ;
déterminer la localisation du dispositif sans fil (2) ; et
stocker la localisation du dispositif sans fil (2) dans un cache local, étant donné que des paquets entrants sont attendus prochainement au serveur d'annonce d'adresse, IAP, (400) destiné au dispositif sans fil (2).

12. Procédé d'assistance de préchargement d'une localisation d'un dispositif sans fil (2) d'un réseau de communication mobile (9), le procédé étant réalisé dans un registre de localisation, LR, (500) et comprenant les étapes consistant à :
recevoir (540) une commande de préchargement comprenant un identifiant du dispositif sans fil (2) en provenance d'un nœud de maintenance de localisation, LMN, (200) ;
déterminer (542) la localisation du dispositif sans fil (2) ; et
transmettre (544) la localisation du dispositif sans fil (2) à un serveur d'annonce d'adresse, désigné par serveur d'annonce IP, IAP, (400) pour le stockage dans un cache local, étant donné que des paquets entrants sont attendus prochainement au serveur d'annonce d'adresse, IAP, (400) destiné au dispositif sans fil (2).

13. Registre de localisation, LR, (500) comprenant :
des moyens pour recevoir une commande de préchargement comprenant un identifiant d'un dispositif sans fil (2) à partir d'un nœud de maintenance de localisation, LMN, (200) ;
des moyens permettant de déterminer la localisation du dispositif sans fil (2) ; et
des moyens pour transmettre la localisation du dispositif sans fil (2) à un serveur d'annonce d'adresse, désigné par serveur d'annonce IP, IAP, (400) pour le stockage dans un cache local, étant donné que des paquets entrants sont attendus prochainement au serveur d'annonce d'adresse, IAP, (400) destiné au dispositif sans fil (2).
